# EUROPÄISCHE PATENTANMELDUNG

(11) **EP 2 508 468 A2**
(43) Veröffentlichungstag der Anmeldung: **10.10.2012**
(21) Anmeldenummer: 12154495.1
(22) Anmeldetag: 08.02.2012
(51) Int. Cl.: B67C 3/00

(54) **Verfahren zum automatischen Überprüfen einer Getränkeverarbeitungsanlage**

(30) Priorität: 04.04.2011 DE 102011006717
(71) Anmelder: Krones AG, 93073 Neutraubling (DE)
(72) Erfinder: Führer, Kaj, 93105 Tegernheim (DE)
(74) Vertreter: Grünecker, Kinkeldey, Stockmair & Schwanhäusser

(57) **Zusammenfassung**

Die Erfindung umfasst ein Verfahren zum automatischen Überprüfen einer Getränkeverarbeitungsanlage umfassend die Schritte: Bestimmen wenigstens einer Messgröße eines flüssigen Mediums mit wenigstens einem Sensor (11), wobei das flüssige Medium in wenigstens einer Behandlungsvorrichtung (1;2;3;4) der Getränkeverarbeitungsanlage hergestellt, verwendet und/oder behandelt wird und wobei das Bestimmen nach dem Herstellen, Verwenden und/oder Behandeln des flüssigen Mediums durchgeführt wird, Vergleichen der bestimmten Messgröße mit einem vorherbestimmten Sollwert für die Messgröße, und, wenn eine Abweichung der bestimmten Messgröße von dem vorherbestimmten Sollwert festgestellt wird, Bestimmen einer Ursache der Abweichung und/oder eines Ursprungsortes der Abweichung basierend auf dem Wert der Abweichung und/oder basierend auf der bestimmten Messgröße.

## Beschreibung

Die vorliegende Erfindung betrifft ein Verfahren zum automatischen Überprüfen einer Getränkeverarbeitungsanlage.

In Getränkeverarbeitungsanlagen kann es im Betrieb zu Schäden an Bauteilen oder zu Kontaminationen kommen, die sich negativ auf die Qualität des hergestellten Getränkeprodukts auswirken. Um dies zu verhindern, sind den einzelnen Behandlungsvorrichtungen einer Getränkeverarbeitungsanlage üblicherweise Sensoren zugeordnet, mit denen überprüft werden kann, ob die Behandlungsvorrichtungen ordnungsgemäß arbeiten.

Trotz dieser Sensoren ist es häufig nicht möglich, Ursache und/oder Ursprungsort von Prozessfehlern und/oder Bauteilschäden schnell zu identifizieren.

Daher ist es Aufgabe der vorliegenden Erfindung, ein verbessertes Verfahren zum automatischen Überprüfen einer Getränkeverarbeitungsanlage bereitzustellen.

Die Erfindung stellt ein Verfahren zum automatischen Überprüfen einer Getränkeverarbeitungsanlage bereit, umfassend die Schritte:
Bestimmen wenigstens einer Messgröße eines flüssigen Mediums mittels wenigstens eines Sensors, wobei das flüssige Medium in wenigstens einer Behandlungsvorrichtung der Getränkeverarbeitungsanlage hergestellt, verwendet und/oder behandelt wird und wobei das Bestimmen nach dem Herstellen, Verwenden und/oder Behandeln des flüssigen Mediums durchgeführt wird,
Vergleichen der bestimmten Messgröße mit einem vorherbestimmten Sollwert für die Messgröße, und
wenn eine Abweichung der bestimmten Messgröße von dem vorherbestimmten Sollwert festgestellt wird,
Bestimmen einer Ursache der Abweichung und/oder eines Ursprungsortes der Abweichung basierend auf dem Wert der Abweichung und/oder basierend auf der bestimmten Messgröße.

Das Verfahren erlaubt eine schnelle Identifikation und/oder Lokalisation von Prozessfehlern und Bauteilschäden, basierend auf einem Vergleich der bestimmten Messgröße mit einem vorherbestimmten Sollwert für die Messgröße und/oder basierend auf dem Wert der bestimmten Messgröße selbst. Dadurch kann ein verbessertes Verfahren zum automatischen Überprüfen einer Getränkeverarbeitungsanlage erhalten werden.

Durch das Verfahren kann insbesondere überprüft werden, ob die Getränkeverarbeitungsanlage ordnungsgemäß oder korrekt funktioniert.

Die bestimmte Ursache der Abweichung kann insbesondere eine mögliche Ursache sein. Der bestimmte Ursprungsortes der Abweichung kann insbesondere ein möglicher Ursprungsort sein. Mit anderen Worten kann das Bestimmen der Ursache und/oder des Ursprungsortes mit einer Unsicherheit verbunden sein.

Bei der Abweichung kann es sich um eine gewünschte oder ungewünschte Parameterveränderung handeln.

Unter einer Getränkeverarbeitungsanlage kann eine Anlage verstanden werden, in der ein oder mehrere Getränkeprodukte verarbeitet, insbesondere hergestellt und/oder abgefüllt, werden. Bei dem Getränkeprodukt kann es sich beispielsweise um ein alkoholisches oder nicht alkoholisches Getränk, beispielsweise um Bier, Wasser, Saft oder ähnliches, handeln.

Bei der Behandlungsvorrichtung kann es sich beispielsweise um eine Mischvorrichtung handeln, in der zwei oder mehr Ausgangsprodukte zu einem Getränkeprodukt vermischt werden. Die wenigstens eine Behandlungsvorrichtung kann auch eine Füllvorrichtung zum Abfüllen eines Getränkeprodukts in Behälter, beispielsweise in Flaschen, umfassen.

Die wenigstens eine Behandlungsvorrichtung kann auch eine Vorrichtung sein, in der das flüssige Medium als Prozess- oder Brauchmedium verwendet wird. Beispielsweise kann die wenigstens eine Behandlungsvorrichtung eine Vorformlingsherstellungsvorrichtung, insbesondere eine Spritzgießvorrichtung, eine Temperiervorrichtung, insbesondere eine Heizvorrichtung, eine Blasformmaschine zum Herstellen von Kunststoffbehältern aus Vorformlingen, eine Sterilisationsvorrichtung zum Sterilisieren von Behältern und/oder einen Rinser umfassen.

Die wenigstens eine Behandlungsvorrichtung kann auch eine Transportvorrichtung zum Fördern des flüssigen Mediums umfassen. Die Transportvorrichtung kann beispielsweise wenigstens eine Pumpe und/oder wenigstens eine Rohrleitung umfassen.

Bei dem flüssigen Medium kann es sich insbesondere um Wasser, insbesondere Prozesswasser, Brauchwasser und/oder Abwasser, der Getränkeverarbeitungsanlage handeln. Alternativ kann es sich bei dem flüssigen Medium auch um ein in der Getränkeverarbeitungsanlage verarbeitetes Getränkeprodukt oder um ein Ausgangsprodukt eines in der Getränkeverarbeitungsanlage verarbeiteten Getränkeprodukts handeln.

Als Messgröße kann ein Parameter oder eine Eigenschaft des flüssigen Mediums bezeichnet werden, die mittels wenigstens eines Sensors bestimmt werden kann. Das Bestimmen der wenigstens einen Messgröße kann also einem Messen oder Bestimmen eines Wertes des wenigstens einen Parameters oder der wenigstens einen Eigenschaft entsprechen.

Der vorherbestimmte oder gewünschte Sollwert kann in einem Speicherelement der Getränkeverarbeitungsanlage gespeichert sein. Der Vergleich der bestimmten Messgröße mit dem vorherbestimmten Sollwert kann insbesondere durch ein Steuerungselement der Getränkeverarbeitungsanlage durchgeführt werden. Bei dem Steuerungselement kann es sich beispielsweise um eine speicherprogrammierbare Steuerung oder einen Computer handeln.

Die Ursache und/oder der Ursprungsort können insbesondere dann bestimmt werden, wenn die Abweichung und/oder der bestimmte Messwert ein vorherbestimmtes Kriterium erfüllt. Damit kann beispielsweise kleinen Schwankungen der Messgröße und/oder Messunsicherheiten Rechnung getragen werden.

Die Ursache und/oder der Ursprungsort können insbesondere nur dann bestimmt werden, wenn die Abweichung und/oder der bestimmte Messwert ein vorherbestimmtes Kriterium erfüllt.

Das vorherbestimmte Kriterium kann beispielsweise eine Toleranz für die Abweichung festlegen, insbesondere wobei, wenn die Abweichung der bestimmten Messgröße von dem vorherbestimmten Sollwert kleiner als die Toleranz ist, das vorherbestimmte Kriterium nicht erfüllt ist. Nur wenn die Abweichung größer als die Toleranz ist, kann das vorherbestimmte Kriterium als erfüllt angesehen werden und ein Bestimmen einer Ursache der Abweichung und/oder eines Ursprungsortes der Abweichung durchgeführt werden.

Das vorherbestimmte Kriterium kann auch wenigstens einen Schwellenwert für die Messgröße spezifizieren. Dadurch können beispielsweise Grenzwerte miteinbezogen werden.

Insbesondere kann das vorherbestimmte Kriterium dann erfüllt sein, wenn die bestimmte Messgröße den Schwellenwert übersteigt oder unterschreitet. Beispielsweise kann der vorherbestimmte Sollwert einem idealen oder gewünschten Wert für die Messgröße entsprechen und der Schwellenwert einem Grenzwert. In diesem Fall kann das Bestimmen einer Ursache und/oder eines Ursprungsortes durchgeführt werden wenn einerseits der bestimmte Messwert vom vorherbestimmten Sollwert abweicht und gleichzeitig den Schwellenwert übersteigt oder unterschreitet.

Der vorherbestimmte Sollwert kann auch dem Schwellenwert entsprechen.

Das Bestimmen einer Ursache der Abweichung und/oder eines Ursprungsortes kann insbesondere durch ein Steuerungselement der Getränkeverarbeitungsanlage durchgeführt werden.

Eine bestimmte Ursache und/oder ein bestimmter Ursprungsort können, beispielsweise über eine Anzeigevorrichtung, an eine Bedienperson ausgegeben werden. Es kann im Fall einer Abweichung auch eine Warnmeldung und/oder ein Warnsignal ausgegeben werden, insbesondere, wenn die Abweichung und/oder der bestimmte Messwert ein vorherbestimmtes Kriterium erfüllen, beispielsweise ein oben beschriebenes vorherbestimmtes Kriterium. Die Anzeigevorrichtung kann insbesondere einen Bildschirm umfassen.

Die Bedienperson kann dann basierend auf der ausgegebenen bestimmten Ursache und/oder dem ausgegebenen bestimmten Ursprungsort weitere Schritte auslösen, beispielsweise wenigstens eine Betriebseinstellung der Getränkeverarbeitungsanlage verändern oder anpassen.

Das Bestimmen eines Ursprungsortes kann insbesondere ein Bestimmen oder Identifizieren eines Bauteils der Getränkeverarbeitungsanlage, insbesondere einer Behandlungsvorrichtung der Getränkeverarbeitungsanlage, umfassen. Insbesondere kann jedem Bauteil ein eindeutiger Messwert/Kenngröße zugeordnet werden, sodass Fehler am Ende der Prozesskette durch eine gemessene Abweichung eindeutig zuordenbar sind oder zumindest durch eine Zuordnungseingrenzung lokal eingeschränkt werden kann. Die Zuordnungseingrenzung kann beispielsweise der Fall sein, wenn unvorhergesehene Temperaturabweichungen mehreren Heizelementen zuordenbar sind. Damit kann eine Bedienperson zumindest wissen, wo sie nach Fehlfunktionen suchen soll.

Das Bestimmen einer Ursache der Abweichung kann ein Spezifizieren einer Fehlfunktion oder Fehleinstellung eines oder mehrerer Bauteile der Getränkverarbeitungsanlage umfassen.

Eine Ursache der Abweichung und/oder ein Ursprungsort kann insbesondere basierend auf der Art der bestimmten Messgröße und/oder der Größe der Abweichung der bestimmten Messgröße von dem vorherbestimmten Sollwert durchgeführt werden.

Die wenigstens eine Messgröße kann insbesondere inline gemessen werden. Mit anderen Worten kann die Messung der wenigstens einen Messgröße in der Getränkeverarbeitungsanlage durchgeführt werden, insbesondere ohne ein Anhalten der Getränkeverarbeitungsanlage. Dadurch kann schneller auf mögliche Fehlerquellen geschlossen werden und damit Produktverluste minimiert werden.

Die Getränkeverarbeitungsanlage kann insbesondere mehrere Behandlungsvorrichtungen umfassen, wobei das Bestimmen der wenigstens einen Messgröße nach mehreren Behandlungsvorrichtungen, insbesondere nach allen Behandlungsvorrichtungen, durchgeführt wird.

Das flüssige Medium kann Prozesswasser, Brauchwasser und/oder Abwasser sein. Insbesondere wobei das Bestimmen der wenigstens einen Messgröße vor, insbesondere unmittelbar vor, und/oder während des Einbringens des Prozesswassers, Brauchwassers und/oder Abwassers in eine Sammel- und/oder Abwasseranlage durchgeführt wird.

Die Sammel- und/oder Abwasseranlage kann Teil der Getränkeverarbeitungsanlage sein. Alternativ oder zusätzlich können die Sammel- und/oder Abwasseranlage jedoch auch Teil eines, insbesondere öffentlichen, Abwassersystems sein.

Das flüssige Medium kann ein in der Getränkeverarbeitungsanlage hergestelltes und/oder behandeltes Getränkeprodukt sein, insbesondere wobei das Bestimmen der wenigstens einen Messgröße vor, insbesondere unmittelbar vor, und/oder während des Abfüllens des Getränkeprodukts in einen Sammeltank und/oder in Behälter, insbesondere Flaschen, durchgeführt wird. Auch in diesem Fall kann also das Bestimmen der wenigstens einen Messgröße erst nach oder stromabwärts von möglichen Entstehungsorten von Abweichungen durchgeführt werden.

Die wenigstens eine Messgröße kann eine Temperatur, eine Konzentration, einen Druck, einen Druckabfall und/oder einen pH-Wert umfassen. Beispielsweise kann die Messgröße eine Konzentration einer Chemikalie, einer Konzentration von Rückständen von Dichtungen, einer Konzentration von einem oder mehreren Schadstoffen, einen Rohrdruck, einen Druckabfall im flüssigen Medium und/oder eine Konzentration einer oder mehrerer Zutaten eines Getränkeprodukts umfassen. Die wenigstens eine Messgröße kann auch eine optischen Eigenschaft der Flüssigkeit, beispielsweise Farbe und/oder Trübung, umfassen.

Das Bestimmen einer Ursache und/oder eines Ursprungsortes kann basierend auf Eigenschaften und/oder Betriebseinstellungen der Getränkeverarbeitungsanlage durchgeführt werden.

Insbesondere kann das Bestimmen einer möglichen Ursache und/oder eines möglichen Ursprungsortes basierend auf Expertenwissen über die Getränkeverarbeitungsanlage durchgeführt werden. Als Expertenwissen kann in diesem Zusammenhang eine Spezifikation von Eigenschaften und/oder Betriebseinstellungen der Getränkeverarbeitungsanlage und eine Spezifikation von Zusammenhängen von möglichen Werten von Messgrößen mit den Eigenschaften und/oder Betriebseinstellungen verstanden werden. Das Expertenwissen kann insbesondere in einer Steuerungsvorrichtung der Getränkeverarbeitungsanlage implementiert oder gespeichert sein.

Mit anderen Worten kann basierend auf der Kenntnis des Aufbaus der Getränkeverarbeitungsanlage und/oder des Bearbeitungsprozesses, in dem das flüssige Medium hergestellt, verwendet und/oder behandelt wird, eine Ursache und/oder ein Ursprungsort der Abweichung bestimmt werden.

Wenn eine Abweichung festgestellt wird kann außerdem wenigstens eine Betriebseinstellung basierend auf dem Wert der Abweichung und/oder basierend auf der bestimmten Messgröße verändert oder angepasst werden. Damit kann automatisch auf die Abweichung vom Sollwert reagiert werden.

Beispielsweise kann ein Prozessparameter zum Herstellen, Verwenden und/oder Bearbeiten des flüssigen Mediums verändert oder angepasst werden. Es kann beispielsweise ein Verfahren zum Neutralisieren des flüssigen Mediums verändert und/oder angepasst werden. Insbesondere kann das flüssige Medium umgeleitet werden, beispielsweise in ein anderes Sammelbecken.

Es kann auch die Getränkeverarbeitungsanlage gestoppt werden

Die Erfindung stellt außerdem eine Getränkeverarbeitungsanlage bereit, umfassend:
wenigstens eine Behandlungsvorrichtung, in der ein flüssiges Medium hergestellt, verwendet und/oder behandelt wird,
wenigstens einen Sensor zum Bestimmen wenigstens einer Messgröße des flüssigen Mediums, wobei der wenigstens eine Sensor stromabwärts der wenigstens einen Behandlungsvorrichtung angeordnet ist, und
eine Steuerungsvorrichtung, die derart ausgebildet und/oder konfiguriert ist,
dass sie die bestimmte Messgröße mit einem vorherbestimmten Sollwert für die Messgröße vergleicht, und
wenn sie eine Abweichung der bestimmten Messgröße von dem vorherbestimmten Sollwert feststellt,
eine Ursache der Abweichung und/oder einen Ursprungsort der Abweichung basierend auf dem Wert der Abweichung und/oder basierend auf dem bestimmten Messwert bestimmt.

In einer derartigen Getränkeverarbeitungsanlage ist eine schnelle Identifikation und/oder Lokalisation von beispielsweise Prozessfehlern und/oder Bauteilschäden möglich.

Mit anderen Worten kann die Getränkeverarbeitungsanlage, insbesondere die Steuerungsvorrichtung, derart ausgebildet sein, dass ein oben beschriebenes Verfahren zum automatischen Überprüfen durchführbar ist oder durchgeführt wird. Mit anderen Worten kann die Getränkeverarbeitungsanlage ein oben beschriebenes Verfahren implementieren.

Die Getränkeverarbeitungsanlage, die wenigstens eine Behandlungsvorrichtung, das flüssige Medium, die wenigstens eine Messgröße und/oder der vorherbestimmte Sollwert können insbesondere eines oder mehrere der oben genannten Merkmale umfassen. Insbesondere kann auch ein oben beschriebenes vorherbestimmtes Kriterium implementiert sein.

Das flüssige Medium kann insbesondere Prozesswasser, Brauchwasser und/oder Abwasser sein, wobei die Getränkeverarbeitungsanlage außerdem eine Vorrichtung zum Einbringen von Prozesswasser, Brauchwasser und/oder Abwasser in eine Sammel- und/oder Abwasseranlage umfasst und wobei der wenigstens eine Sensor vor, insbesondere unmittelbar vor, und/oder in der Vorrichtung zum Einbringen von Prozesswasser, Brauchwasser und/oder Abwasser in eine Sammel- und/oder Abwasseranlage angeordnet ist. Die Sammel- und/oder Abwasseranlage kann Teil der Getränkeverarbeitungsanlage sein oder Teil eines, insbesondere öffentlichen, Abwassersystems.

Das flüssige Medium kann auch ein in der Getränkeverarbeitungsanlage hergestelltes und/oder behandeltes Getränkeprodukt sein, wobei die Getränkeverarbeitungsanlage außerdem eine Abfüllvorrichtung zum Abfüllen des Getränkeprodukts in einen Sammeltank und/oder in Behälter, insbesondere Flaschen, umfasst und wobei der wenigstens eine Sensor vor, insbesondere unmittelbar vor, und/oder in der Abfüllvorrichtung angeordnet ist.

Weitere Vorteile und Merkmale der Erfindung werden nachfolgend anhand der beispielhaften
Figuren erläutert. Dabei zeigt
Figur 1 eine beispielhafte Getränkeverarbeitungsanlage; und
Figur 2 eine weitere beispielhafte Getränkeverarbeitungsanlage.

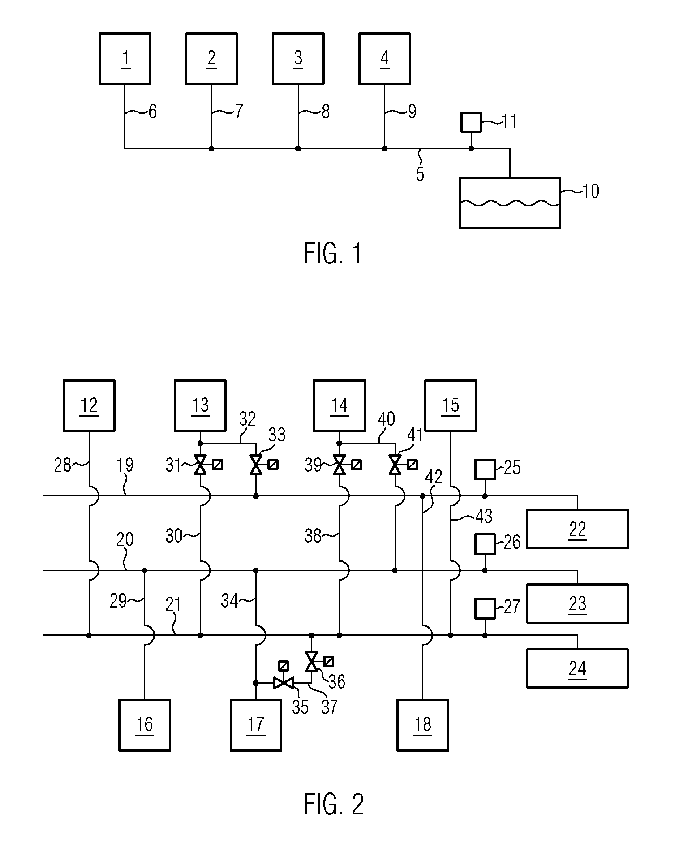

In Figur 1 ist ein Teil einer beispielhaften Getränkeverarbeitungsanlage dargestellt. Beispielsweise kann es sich dabei um eine CIP (Cleaning in Place) Vorrichtung einer Getränkeverarbeitungsanlage handeln. Dabei sind vier Sammeltanks 1, 2, 3 und 4 für Reinigungsflüssigkeiten vorgesehen. Über Zuleitungen 6, 7, 8 und 9 können die jeweiligen Flüssigkeiten in eine gemeinsame Leitung 5 eingeleitet werden. Die verschiedenen Flüssigkeiten können beispielsweise unterschiedliche Temperaturen aufweisen. Über die gemeinsame Leitung 5 kann die Mischung der Reinigungsflüssigkeiten in einen Sammeltank 10 geleitet werden.

Bei dem Sammeltank 10 kann es sich beispielsweise um einen Abwassertank handeln. In diesem Fall wurden die Reinigungsflüssigkeiten vor dem Einleiten in den Sammeltank 10 durch eine oder mehrere in Figur 1 nicht dargestellte Behandlungsvorrichtungen der Getränkverarbeitungsanlage geleitet, um diese zu reinigen.

Alternativ kann der Sammeltank 10 eine aus den vier Flüssigkeiten gemischte Reinigungsflüssigkeit sammeln und nachfolgenden, nicht dargestellten, Behandlungsvorrichtungen der Getränkverarbeitungsanlage bereitstellen.

In Figur 1 ist außerdem ein Sensor 11 dargestellt, der zur Messung wenigstens einer Messgröße der in der Leitung 5 vorhandenen Flüssigkeit dient. Der Sensor 11 ist in diesem Beispiel unmittelbar vor dem Sammeltank 10 und stromabwärts von möglichen Behandlungsvorrichtungen der Getränkeverarbeitungsanlage angeordnet. Der Sensor 11 kann beispielsweise ein Temperatursensor sein. Es könnte jedoch auch ein optischer Sensor zum Bestimmen einer optischen Eigenschaft der Flüssigkeit, beispielsweise der Farbe und/oder der Trübung, sein. Alternativ oder zusätzlich könnte der pH Wert der Flüssigkeit oder die Konzentration einer Komponente der Flüssigkeit, beispielsweise eines Schadstoffs, bestimmt werden.

In einer nicht dargestellten Steuerungsvorrichtung der Getränkeverarbeitungsanlage kann die mit dem Sensor 11 bestimmte Messgröße mit einem gespeicherten vorherbestimmten Sollwert verglichen werden.

Wenn die Steuerungsvorrichtung eine Abweichung der bestimmten Messgröße von dem vorherbestimmten Sollwert gemäß eines vorherbestimmten Kriteriums feststellt, kann die Steuerungsvorrichtung eine Ursache der Abweichung und/oder einen Ursprungsort der Abweichung basierend auf dem Wert der Abweichung und/oder basierend auf der Messgröße bestimmen.

Mit anderen Worten kann sie eine Ursache und/oder einen Ursprungsort bestimmen, wenn die Abweichung ein vorherbestimmtes Kriterium erfüllt. Das vorherbestimmte Kriterium kann beispielsweise einen Schwellenwert für die bestimmte Messgröße und/oder eine Toleranzgröße für die Abweichung spezifizieren.

Die Bestimmung der Ursache und/oder des Ursprungsortes kann insbesondere basierend auf der Kenntnis der Prozesse, insbesondere der Prozesszeit und/oder den Leitungswegen des flüssigen Mediums, bestimmt werden. Das Bestimmen kann also anhand von Zuordnungen der Mediumströme/-verläufe und/oder Zykluszeiten/Prozesszeiten zu Entstehungsorten, Verfahren, Maschinen und/oder Bauteilen, bei denen das flüssige Medium in irgendeiner Weise behandelt und/oder verändert wird, durchgeführt werden. Alternativ oder zusätzlich kann durch die Art der Messgröße und/oder der Größe der Abweichung ein Rückschluss auf den Entstehungsort und/oder die Ursache der Abweichung getätigt werden.

Durch ein derartiges Verfahren ist eine schnelle Identifikation und/oder Lokalisation beispielsweise von Prozessfehlern und Bauteilschäden möglich. Dadurch kann auch eine Verringerung von Reparaturzeiten, beispielsweise mittleren Reparaturzeiten (MTTR), erreicht werden.

Auch kann je nach vorherbestimmtem Kriterium bereits bei einer geringen Abweichung ein Warnsignal an eine Bedienperson ausgegeben werden, beispielsweise wenn der Messwert einen vorherbestimmten Schwellenwert übersteigt oder unterschreitet.

Im Falle des in Figur 1 dargestellten Beispiels, kann beispielsweise eine gemessene Temperatur des Mediums in Leitung 5 automatisch mit einem vorherbestimmten Sollwert verglichen werden. Wird eine Abweichung festgestellt, kann beispielsweise anhand der Größe der Abweichung automatische rückgeschlossen werden, in welchem der Tanks 1 bis 4 die Reinigungsflüssigkeit eine falsche Temperatur aufweist. Dafür kann das Wissen über die Mischverhältnisse und/oder die Heizprozesse in den Tanks herangezogen werden.

Figur 2 zeigt einen weiteren beispielhaften Teil einer Getränkeverarbeitungsanlage. In diesem Fall sind mehrere gemeinsame Leitungen 19, 20 und 21 dargestellt, die in je einen Sammeltank 22, 23 beziehungsweise 24 münden. Behandlungsvorrichtungen 12 bis 18 können flüssige Medien in eine oder mehrere der Sammelleitungen 19, 20 und 21 leiten. Beispielsweise ist aus der Behandlungsvorrichtung 12 eine Flüssigkeit über die Zuleitung 28 in die Sammelleitung 21 leitbar. Analog ist eine Zuleitung 29 für die Behandlungsvorrichtung 16 vorgesehen.

Behandlungsvorrichtungen 13, 14 und 17 weisen je zwei Zuleitungen auf. Beispielsweise kann eine Flüssigkeit aus der Behandlungsvorrichtung 13 über die Zuleitung 30 in die gemeinsame Leitung 21 eingeleitet werden. Alternativ kann über die Zuleitung 32 die Flüssigkeit in die gemeinsame Leitung 19 geleitet werden. Die Zuleitung in eine oder andere der gemeinsamen Leitungen kann über Ventile 31 und 32 gesteuert werden. In ähnlicher Weise weist die Behandlungsvorrichtung 14 zwei Zuleitungen 38 und 40 mit Ventilen 39 und 41 auf. Die Behandlungsvorrichtung 17 weist Zuleitungen 34 und 37 auf. In diesem Fall sind in der zweiten Zuleitung 37, die in die gemeinsame Leitung 21 mündet, zwei Ventile 35 und 36 vorgesehen.

Unmittelbar vor den Sammeltanks 22 bis 24 ist je ein Sensor 25, 26 und 27 vorgesehen, mit dem jeweils wenigstens eine Messgröße des in der Sammelleitung 19, 20 oder 21 befindlichen flüssigen Mediums bestimmt werden kann. Eine nicht dargestellte Steuerungsvorrichtung kann dann basierend auf den bestimmten Messgrößen ein oben beschriebenes Verfahren zum Überprüfen der Funktion der Getränkeverarbeitungsanlage durchführen. Dabei können die drei flüssigen Medien entweder einzeln oder in Kombination betrachtet werden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Verfahren zum automatischen Überprüfen einer Getränkeverarbeitungsanlage umfassend die Schritte:
Bestimmen wenigstens einer Messgröße eines flüssigen Mediums mittels wenigstens eines Sensors (11), wobei das flüssige Medium in wenigstens einer Behandlungsvorrichtung (1; 2; 3; 4) der Getränkeverarbeitungsanlage hergestellt, verwendet und/oder behandelt wird und wobei das Bestimmen nach dem Herstellen, Verwenden und/oder Behandeln des flüssigen Mediums durchgeführt wird;
Vergleichen der bestimmten Messgröße mit einem vorherbestimmten Sollwert für die Messgröße; und
wenn eine Abweichung der bestimmten Messgröße von dem vorherbestimmten Sollwert festgestellt wird:
Bestimmen einer Ursache der Abweichung und/oder eines Ursprungsortes der Abweichung basierend auf dem Wert der Abweichung und/oder basierend auf der bestimmten Messgröße.

2. Verfahren nach Anspruch 1, wobei das Bestimmen der Ursache und/oder der Abweichung durchgeführt wird, wenn die Abweichung und/oder die bestimmte Messgröße ein vorherbestimmtes Kriterium erfüllen.

3. Verfahren nach Anspruch 1 oder 2, wobei das flüssige Medium Prozesswasser, Brauchwasser und/oder Abwasser ist, insbesondere wobei das Bestimmen der wenigstens einen Messgröße vor, insbesondere unmittelbar vor, und/oder während des Einbringens des Prozesswassers, Brauchwassers und/oder Abwassers in eine Sammel- und/oder Abwasseranlage durchgeführt wird.

4. Verfahren nach einem der vorangegangenen Ansprüche, wobei das flüssige Medium ein in der Getränkeverarbeitungsanlage hergestelltes und/oder behandeltes Getränkeprodukt ist, insbesondere wobei das Bestimmen der wenigstens einen Messgröße vor, insbesondere unmittelbar vor, und/oder während des Abfüllens des Getränkeprodukts in einen Sammeltank und/oder in Behälter, insbesondere Flaschen, durchgeführt wird.

5. Verfahren nach einem der vorangegangenen Ansprüche, wobei die wenigstens eine Messgröße eine Temperatur, eine Konzentration, einen Druck, einen Druckabfall und/oder einen pH Wert umfasst.

6. Verfahren nach einem der vorangegangenen Ansprüche, wobei das Bestimmen einer Ursache und/oder eines Ursprungsortes basierend auf Eigenschaften und/oder Betriebseinstellungen der Getränkeverarbeitungsanlage durchgeführt wird.

7. Verfahren nach Anspruch 6, wobei das Bestimmen einer Ursache und/oder eines Ursprungsortes basierend auf Expertenwissen über die Getränkeverarbeitungsanlage durchgeführt wird.

8. Getränkeverarbeitungsanlage umfassend:
wenigstens eine Behandlungsvorrichtung (1; 2; 3; 4), in der ein flüssiges Medium hergestellt, verwendet und/oder behandelt wird;
wenigstens einen Sensor (11) zum Bestimmen wenigstens einer Messgröße des flüssigen Mediums, wobei der wenigstens eine Sensor (11) stromabwärts der Behandlungsvorrichtung angeordnet ist; und
eine Steuerungsvorrichtung, die derart ausgebildet und/oder konfiguriert ist,
dass sie die bestimmte Messgröße mit einem vorherbestimmten Sollwert für die Messgröße vergleicht; und
wenn sie eine Abweichung der bestimmten Messgröße von dem vorherbestimmten Sollwert feststellt:
eine Ursache der Abweichung und/oder einen Ursprungsort der Abweichung basierend auf dem Wert der Abweichung und/oder basierend auf der bestimmten Messgröße bestimmt.

9. Getränkeverarbeitungsanlage nach Anspruch 8, wobei das flüssige Medium Prozesswasser, Brauchwasser und/oder Abwasser ist, wobei die Getränkeverarbeitungsanlage außerdem eine Vorrichtung zum Einbringen von Prozesswasser, Brauchwasser und/oder Abwasser in eine Sammel- und/oder Abwasseranlage umfasst und wobei der wenigstens eine Sensor (11) vor, insbesondere unmittelbar vor, und/oder in der Vorrichtung zum Einbringen von Prozesswasser, Brauchwasser und/oder Abwasser in eine Sammel- und/oder Abwasseranlage angeordnet ist.

10. Getränkeverarbeitungsanlage nach Anspruch 8 oder 9, wobei das flüssige Medium ein in der Getränkeverarbeitungsanlage hergestelltes und/oder behandeltes Getränkeprodukt ist, wobei die Getränkeverarbeitungsanlage außerdem eine Abfüllvorrichtung zum Abfüllen des Getränkeprodukts in einen Sammeltank und/oder in Behälter, insbesondere Flaschen, umfasst und wobei der wenigstens eine Sensor (11) vor, insbesondere unmittelbar vor, und/oder in der Abfüllvorrichtung angeordnet ist.
